Europäisches Patentamt

European Patent Office

Office européen des brevets

(19)

(11) Publication number: **0 093 615**
**B1**

(12) **EUROPEAN PATENT SPECIFICATION**

(45) Date of publication of patent specification: **26.10.88**

(51) Int. Cl.⁴: **H 02 K 17/36, H 02 P 7/74**

(21) Application number: **83302486.2**

(22) Date of filing: **03.05.83**

(54) **Variable speed rotary electrical machines.**

(30) Priority: **03.05.82 US 374375**

(43) Date of publication of application:
**09.11.83 Bulletin 83/45**

(45) Publication of the grant of the patent:
**26.10.88 Bulletin 88/43**

(84) Designated Contracting States:
**CH DE FR GB IT LI NL SE**

(56) References cited:
**EP-A-0 037 307**
**EP-A-0 084 717**
**AT-B- 46 682**
**AT-B- 338 384**
**GB-A-1 270 247**
**GB-A-2 043 359**
**US-A-3 539 891**

(73) Proprietor: **THE GARRETT CORPORATION**
**9851-9951 Sepulveda Boulevard P.O. Box 92248**
**Los Angeles, California 90009 (US)**

(72) Inventor: **Kalman, Gabor**
**29422 Whitley Collins Drive**
**Palos Verdes California (US)**

(74) Representative: **Arthur, George Fitzgerald et al**
**KILBURN & STRODE 30, John Street**
**London WC1N 2DD (GB)**

Courier Press, Leamington Spa, England.

## Description

This invention relates generally to rotating electrical machinery, for example an induction motor drive system representing a leading power factor load.

Induction and synchronous motors are essentially constant speed electrical machines. Many industrial, military and traction applications, however, require electric drives with wide speed variations. The requirement of having a wide operating speed range prevented both synchronous and induction alternating current motors from being practical for wide speed range variable speed drives until the recent advent of high-power, solid-state electronic components which have been used to construct line and forced-commutated inverters for variable-voltage, variable-frequency power supplies for AC motor drives. Yet today, even the most succesful AC motor drives cannot compete, in terms of initial cost, with traditional DC motor drives used in most variable speed motor applications. The reason for the high cost of AC motor drive systems is that the least expensive inverter, the line-commutated type, and the least expensive motor, the Squirrel-cage induction type, are fundamentally incompatible in terms of their reactive power requirements.

AC induction motors typically operate at a lagging power factor, while line-commutated inverters can function only if the load they supply has a leading power factor. A static inverter, which is capable of supplying lagging power factor loads, must have auxiliary means to force the commutation of the solid-state switching devices which comprise the inverter; hence the name forced-commutated inverter also referred to as self-commutated inverter. The requirement for separate commutation circuitry makes the force-commutated inverter significantly more expensive than a line-commutated inverter having a comparable power rating.

Synchronous motors are capable of operating at a leading power factor and, therefore, are compatible with line-commutated inverters. Below a minimum speed, however, synchronous machines fail to generate sufficient voltage to line-commutate the thyristors in the inverter, which necessitates a special start mode for such machines. In the past, two methods have been used to start synchronous motors operated in conjunction with line-commutated inverters. one method is to provide motor starting by means of a force-commutated inverter that operates only at low speeds when the motor is being started and is disconnected once the speed is sufficiently high to assure line-commutation. A second method is to selectively pulse current into sets of the synchronous machine winding through the inverter, which causes the machine to accelerate until reaching a speed where the generated voltage is sufficient for line-commutation. In the second starting mode, inverter commutation is achieved by quenching the current in the DC link. The shortcomings of the two foregoing methods of starting a synchronous motor are that the first method requires separate forced-commutated inverter and that the second method produces a relatively low starting torque.

The low starting torque results from limitations on the amount of pulse-power that can be transferred through the DC link. In some applications, such as traction drives, the maximum torque demand occurs at starting, which severely limits the utility of starting a synchronous machine by selectively pulsing the machine windings through the inverter. A further problem associated with synchronous motors is the requirement for rotor excitations, which necessitates either slip-rings or a complicated brushless system.

One object of the invention is to provide an AC motor drive system with the rugged construction of Squirrel-cage motors and the simplicity of line-commutated inverters.

To this end, the invention, as claimed for the contracting states NL and SE, starts from a variable speed dynamoelectric induction motor drive system comprising a main stator and a main rotator, an auxiliary stator and an auxiliary rotor electrically and mechanically coupled to the main rotor, a main inverter connected to the main stator for supply of electric current, an auxiliary inverter connected to the auxiliary stator for supplying electric current and a controller for the inverters, as known from GB—A—2 043 359, and is characterized in that the controller is arranged to control the inverters to cause the auxiliary rotor to deliver reactive power to the main rotor to permit line commutation of the main inverter.

Such an induction motor drive system is considered as included in the state of the art for the contracting states CH, DE, FR, GB, IT, LI according to Article 54(3) EPC from a co-pending European application, published by EP—AI—84 717.

That application describes an induction motor drive system including a main machine and a smaller auxiliary machine, installed in a common housing. The rotors of the two machines are mounted on a common shaft, and both rotors have a squirrel-cage construction. The rotor bars of the main machine and of the auxiliary machines are concatenated at their adjoining ends and are connected to conventional end rings at their extremities. The main machine is supplied from a line-commutated inverter, and the auxiliary machine is supplied from a separate, forced-commutated inverter. The two inverters are supplied by separate variable d.c. link voltage sources, such as controlled rectifiers or chopper-type input inverters.

In the induction motor drive system described in the aforementioned co-pending application, the forced-commutated inverter for the auxiliary machine is specially configured such that the stator of the main machine appears to have a leading power factor. In particular, the frequency and voltage levels of the A.C. signals supplied by the forced-commutated inverter to the auxiliary stator are coupled through the respective auxiliary and main rotors to the main stator, causing its current to lead its voltage. This permits the use of a line-commutated inverter to drive the main machine, thereby providing a significant cost saving for a machine of a given size.

The induction motor drive system described in the aforementioned co-pending application produces a high starting torque and is suitable for use in applications requiring power ratings of up to several hundred horsepower. Also, its use of a line-commutated inverter in place of a forced-commutated inverter provides a significant cost saving over known prior systems. However, there is a need for even further cost savings in some situations, such as where the system's starting torque need not be particularly high. The present invention can fulfill this need.

An embodiment of the present invention starts from such a variable speed induction machine that includes an induction motor operating at a leading power factor. The machine includes means for providing reactive power to the induction motor's rotor, to permit line commutation of an inverter supplying the motor's stator, and to permit the inverter to be supplied by a substantially constant d.c. link voltage. The invention may thereby provide substantial cost savings over other variable speed systems of this type, which achieve line commutation of their inverters only by using a d.c. link voltage that is variable.

Thus, according to the present invention, as claimed for the Contracting States CH, DE, FR, GB, IT, LI, a variable speed dynamoelectric induction motor drive system comprises a main stator and a main rotor an auxiliary stator and an auxiliary rotor electrically and mechanically coupled to the main rotor, a main inverter connected to the main stator for supply of electric current at a constant voltage thereto, an auxiliary inverter connected to the auxiliary stator for supplying electric current at a variable voltage thereto, and a controller for the inverters;

the controller being arranged to control the speed of the motor drive system by simultaneously varying the frequency of operation of the main inverter;

the frequency of operation of the auxiliary inverter and the voltage level of the auxiliary inverter while maintaining the voltage level of the main inverter at a constant level, whereby reactive power is supplied to the auxiliary rotor for enabling the main inverter to operate as a line-commutated inverter.

The variable speed induction machine may include a main machine and a smaller auxiliary machine, installed in a common housing. The rotors of the two machines are mounted on a common shaft and both may have a squirrel-cage construction. The rotor bars of the main machine and of the auxiliary machine are concatenated at their adjoining ends and are connected to conventional end rings at their extremities. The line commutated inverter supplies the main machine's stator, and a separate forced-commutated inverter supplies the auxiliary machine's stator. A diode rectifier, supplied by an a.c. line through a set of switches may be used to supply the substantially constant d.c. link voltage to the line-commutated inverter. A controller adjusts the forced-commutated inverter to supply an a.c. signal having a selectable frequency and voltage level, such that a prescribed reactive power is coupled through the respective auxiliary and main rotors to the main stator. This causes the main stator to appear to constitute a leading power factor load, and permits the use of a line-commutated inverter supplied from a substantially constant d.c. link voltage.

To accelerate the drive system from a standstill to its minimum operating speed, the switches coupling the a.c. line to the diode rectifier are opened and the switching elements, e.g. thyristors in the line-commutated inverter are gated on continuously. This effectively shorts the main motor circuit through the line-commutated inverter—d.c. link-diode rectifier path, and the motor then operates like a conventional squirrel-cage induction machine fed through the forced-commutated inverter. Since, in the case of fan-type loads, the power requirement even at half-speed is less than 15 percent of the maximum rating, the forced-commutated inverter need not have a capacity that is particularly large in comparison to that of the line-commutated inverter.

After the motor driver system reaches its minimum operating speed, the switches coupling the a.c. voltage source to the diode rectifier are closed and the constant d.c. link voltage is thereafter supplied to the line-commutated inverter. The controller then controllably varies the .specific frequency and voltage level of the a.c. signal supplied by the forced-commutated inverter to the auxiliary stator, such that the motor drive system operates at a selected speed.

In an alternative embodiment of the invention, the motor drive system may include a plurality of machines, each having a main machine with a main stator and a main rotor and an auxiliary machine with an auxiliary stator and an auxiliary rotor. A separate forced-commutated inverter supplies current to each auxiliary stator, and a single line-commutated inverter, supplied by a substantially constant d.c. link voltage, drives all of the main stators in parallel.

According to a second aspect of the invention in a method of driving an induction motor at a controllably variable speed, which motor comprises a main stator and a main rotor, an auxiliary stator and an auxiliary rotor electrically and mechanically coupled to the main rotor, a main inverter for supplying the main stator, and an auxiliary inverter for supplying the auxiliary stator,

the main inverter supplies current to the main stator at a constant voltage level and

the speed of the system is controlled by simultaneously varying the frequency of operation of the main inverter, the frequency of operation of the auxiliary inverter, and the voltage level of the auxiliary inverter, with reactive power being supplied from the auxiliary rotor to the main rotor, whereby the main inverter operates as a line-commutated inverter.

Other aspects and advantages of the present invention will become apparent from the following description of two specific embodiments of the invention which are described by way of example only and with reference to the accompanying drawings.

In the drawings:

Figure 1 is a simplified block diagram of a variable speed, leading power factor induction motor drive embodying the present invention;

Figure 2 is a simplified schematic diagram of the switches, diode rectifier and line-commutated inverter portion of the drive system of Figure 1;

Figure 3 is a graph depicting the relationship between the main inverter frequency and the auxiliary inverter voltage for a set of fixed motor speeds ranging from 50 percent to 100 percent of maximum speed;

Figure 4 is a graph depicting the voltage and frequency of the auxiliary inverter and the frequency of the main inverter for the entire range of motor speeds;

Figure 5 is an exploded perspective view of a portion of the motor drive system depicted in Figure 1; and

Figure 6 is a simplified schematic diagram of an alternative embodiment of the invention which includes a plurality of separately controlled machines.

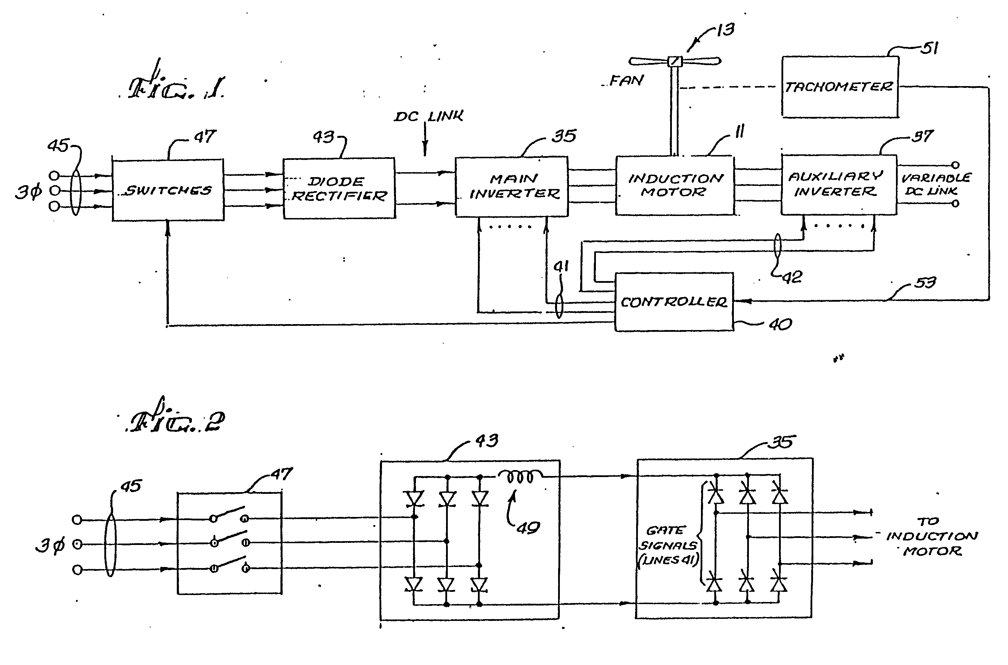

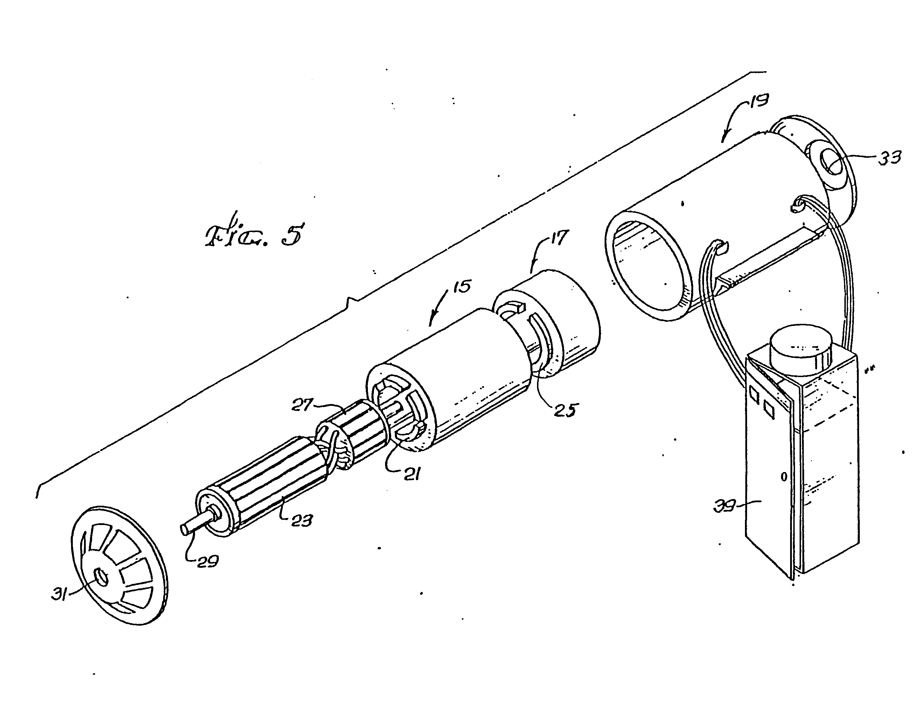

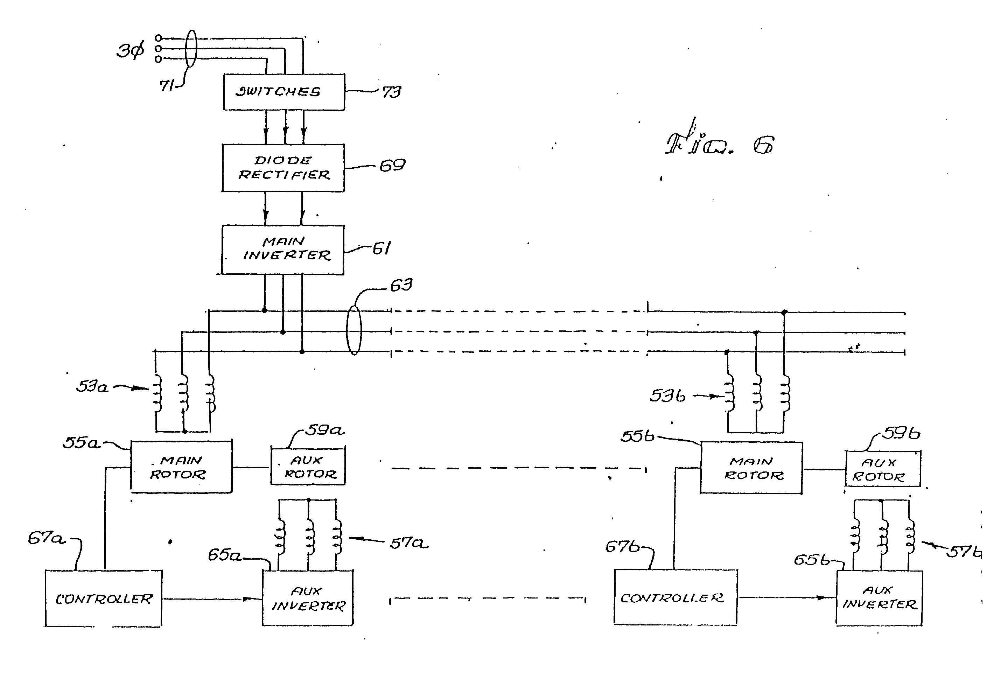

Referring now to the drawings, and particularly to Figure 1, there is shown a simplified block diagram of a variable speed induction motor drive system embodying the present invention, including an induction motor 11 driving a load such as a fan 13, Figure 5 is an exploded perspective view of the motor, showing it to include a main machine 15 and an auxiliary machine 17, installed in a common housing 19. The main machine includes a three-phase main stator assembly 21, and a main rotor assembly 23, preferably of a squirrel-cage construction, and the axuliary machine likewise includes a three-phase auxiliary stator assembly 25 and an auxiliary rotor assembly 27 also preferably of a squirrel-cage construction. The rotor bars of the main and auxiliary rotor assemblies 23 and 27 are electrically concatenated at their adjoining ends as illustrated in Figure 5, and are connected to conventional end rings at their other ends, as described in the aforesaid EP—A1—084 717. The main rotor assembly and the auxiliary rotor assembly are mounted on a common rotor shaft 29, which is rotatably mounted within the housing by end belts 31 and 33.

Referring again to Figure 1, a main inverter 35 supplies three-phase electrical power to the main stator assembly, 21, and an auxiliary inverter 37 supplies three-phase electrical power to the auxiliary stator assembly 25. The two inverters, which are located within an inverter housing 39 (Figure 5) both include a plurality of thyristors that are gated on at appropriate times, to commutate the d.c. link voltages supplied to them. In particular, a controller 40 couples appropriate gating signals over lines 41 and 42 to the main and auxiliary inverters, respectively, to controllably adjust the frequencies and voltage levels of the a.c. signals they supply. This effects the prescribed motor speed control.

An induction motor such as the main machine 15 inherently operates at a lagging power factor, and is therefore ordinarily incompatible with a line-commutated inverter, which can drive only leading power factor loads. However, as described more fully in the aforementioned EP—A1—084 717 which is incorporated by reference into this application, the main machine can be made to be compatible with a line-commutated inventer by coupling the appropriate reactive power to it via the auxiliary machine 17.

In the induction motor drive system described in the aforementioned application, a variable speed is achieved by controllably varying the frequencies and the voltage levels of the a.c. signals supplied by the main inverter and the auxiliary inverter. This ordinarily requires the use of two separate phase-delay rectifiers for supplying d.c. link voltages that are variable, thereby adding to the system's complexity and cost. This added complexity and cost is believed to be unnecessary in situations not requiring a high starting torque, such as in an induction motor drive system for driving fan-type load.

In the present embodiment of the invention, the controller 40 controllably adjusts the frequency and voltage of the a.c. signal supplied by the auxiliary inverter 37 and controllably adjusts the frequency of the a.c. signal supplied by the main inverter 35, such that the main inverter can be line-commutated and supplied by a d.c. link having a substantially constant voltage. This eliminates the need for a relatively complex and costly phase-delay rectifier for supplying a d.c. link voltage that is variable. Although the drive system of the invention provides a starting torque somewhat reduced from that which can be achieved using variable d.c. link voltage, the system is suitable for use in driving many loads, such as fan-type loads.

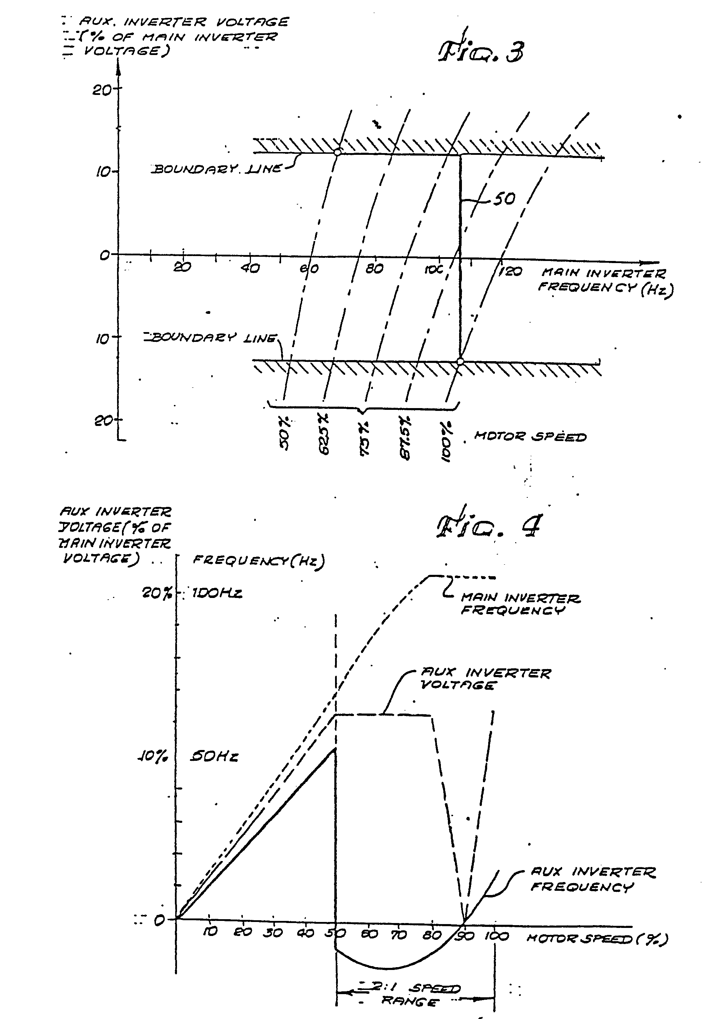

Referring now to both Figures 1 and 2, the constant d.c. link voltage supplied to the main inverter 35 is produced by a diode rectifier 43, which in turn is supplied from a three phase power line 45 via a set of electrical switches 47. The diode rectifier includes an inductor 49 following its diodes, to reduce the ripple in the rectified voltage signal.

Figures 3 and 4 depict the prescribed relationships between the voltages and frequencies of the respective main and auxiliary inverters 35 and 37, as a function of motor speed. Figure 3 in particular depicts the relationship between main inverter frequency and auxiliary inverter voltage, for a set of fixed motor speeds ranging from 50 percent to 100 percent of maximum speed. In the graph, the auxiliary inverter voltage is expressed as a percentage of the main inverter voltage. Boundaries for the auxiliary inverter voltage of plus and minus 12.5 percent of the main inverter's voltage are included in the figure, to indicate arbitrary limits imposed to limit the auxiliary inverter's rating. The locus of both the main inverter's frequency and the auxiliary inverter's voltage is indicated by a heavy solid line 50 for a 2:1 speed range.

Figure 4 depicts the prescribed values for the frequency of the main inverter 35 and for the frequency and voltage of the auxiliary inverter 37, for motor speeds ranging from zero to 100 percent of maximum speed. The curves for the main inverter's frequency and the auxiliary inverter's voltage, for motor speeds of 50 to 100 percent are derived from the locus 50 in Figure 3.

Thus, when it is desired that the induction motor drive system operate at a prescribed speed between 50 and 100 percent of its maximum speed, the controller 40 controllably adjusts the frequency of the main inverter 35 and the frequency and voltage level of the auxiliary inverter 37 to correspond to the values indicated by the graph of Figure 4. For example, if a speed equal to about 60 percent of the drive system's maximum speed is desired, the controller controllably adjusts the main inverter's frequency to be about 84 Hz, the auxiliary inverter's frequency to be about negative 15 Hz and the auxiliary inverter's voltage to be about 12.5 percent that of the main inverter. In this context, a negative frequency simply means that the three phases are switched in a sequence ACB rather than ABC.

To accelerate the induction motor drive system from a standstill to is minimum operating speed, i.e. 50 percent of its maximum speed, the controller 40 opens the set of switches 47, as shown in Figure 2, and gates on continuously the thyristors in the main inverter 35. This in effect shorts the main machine 15 via the main inverter and the diode rectifier 43. At this time, the auxiliary inverter 37 supplies power to the auxiliary machine 17, which operates like a conventional squirrel-cage induction motor. Since in the case of fan-type loads the power requirement, even at half-speed, is ordinarily less than about 15 percent of its maximum rating, the auxiliary inverter has sufficient capacity to accelerate the motor to this speed.

When the drive system reaches its minimum operating speed of 50 percent of its maximum speed, the controller closes the switches and controllably adjusts the main inverter and the auxiliary inverter, as indicated by the graph of Figure 4 discussed above.

In the brake mode, the controller 40 again opens the set of switches 47, shorting the main machine 15 and thereby preventing the drive system from regenerating through the main inverter 35. The auxiliary inverter 37 handles all of the power up to its capacity.

Referring again to Figure 1, the motor drive system further includes a tachometer 51 for monitoring the speed of the motor-driven fan 13 and coupling a signal representative of that speed over line 53 to the controller 40. This permits the controller to achieve a more accurate control of the motor speed.

Figure 6, depicts an alternative embodiment of the invention, which includes a plurality of separate motor drive systems. Each system is similar to the motor drive system described above with reference to Figures 1—5. A first motor drive system includes a main machine having a three phase main stator 53a and a corresponding main rotor 55a, and an auxiliary machine having a three phase auxiliary stator 57a and a corresponding auxiliary rotor 59a which is electrically concatenated with the main rotor 55a. A main inverter 61 supplies three phase power over a power line 63 to the main stator, and an auxiliary inverter 65a provides three phase power to the auxiliary stator. A controller 67a connected between the main rotor and the auxiliary inverter regulates the frequency and voltage level of the a.c. signal supplied by the auxiliary inverter, such that a prescribed reactive power is coupled through the respective rotors to the main stator. This permits the main inverter to be line-commutated and to be supplied by a substantially constant d.c. link voltage. The d.c. link voltage is supplied to the main inverter by a diode rectifier 69, which in turn is connected to a three-phase power line 71 through a set of electrical switches 73.

Like the first motor drive system, a second system includes a main machine having a main stator 53b and a main rotor 55b, and an auxiliary machine having an auxiliary stator 57b, and an auxiliary rotor 59b. A controller 67b connected between the main rotor and an auxiliary inverter 65b regulates the frequency and voltage level of the a.c. signal the auxiliary inverter supplies to the auxiliary stator. The main stator is supplied with three-phase power over the power line 63 from the main inverter 61.

A plurality of additional machines (not shown) can likewise be connected to the main inverter 61 in the manner described above. The invention makes it possible to control the speed of the respective rotors without altering the main inverter frequency, by changing the frequency and voltage level of each auxiliary inverters a.c. output to achieve a desired slip.

It should be appreciated from the fore going description, that the present invention provides an improved induction motor drive system that can operate over a wide speed range. A prescribed reactive power is coupled to the motor's rotor, to permit line commutation of an inverter supplying the motors stator, and to permit the inverter to be supplied by a substantially constant d.c. link voltage.

**Claims for Contracting States: NL, SE**

1. A variable speed dynamoelectric induction motor drive system comprising a main stator (21) and a main rotor (23), an auxiliary stator (17) and an auxiliary rotor (27) electrically and mechanically coupled to the main rotor (23), a main inverter (35) connected to the main stator (21) for supply of electric current, an auxiliary inverter (37) connected to the auxiliary stator for supplying electric current and a controller (40) for the inverters; characterised in that the controller (40) is arranged to control the inverters to cause the auxiliary rotor (27) to deliver reactive power to the main rotor (23) to permit line commutation of the main inverter (35).

2. A drive system as claimed in Claim 1 in which the controller (40) is arranged to control the speed of the motor drive system by simultaneously varying the frequency of operation of the main inverter (35), the frequency of operation of the auxiliary inverter (37), and the voltage level of the auxiliary inverter (37) while maintaining the voltage level of the main inverter (35) at a constant level.

3. A motor drive system as claimed in Claim 1 or Claim 2 in which the main and auxiliary rotors are squirrel-cage rotors with the rotor bars concatenated at their adjoining ends.

4. A motor drive system as claimed in any of the preceding Claims in which the auxiliary inverter (37) is a forced commutated inverter.

5. A motor drive system as claimed in any of the preceding claims including switch means (47) for disabling the supply to the main inverter (35) during start-up of the system.

6. A motor drive system as claimed in an of the preceding Claims in which the main and the auxiliary machines have their rotors (23, 27) mounted on a common shaft (29), the stators (21, 25) being in a common housing (19).

7. A variable speed dynamoelectric motor drive system as claimed in any of the preceding claims, and including a plurality of machines each comprising a main stator, a main rotor, an auxiliary stator, an auxiliary rotor, an auxiliary inverter, and a speed controlling means; all the main stators (53a, b...) being connected to be supplied from a common main inverter (61) supplying electric current at a constant voltage level.

8. A method of driving an induction motor at a controllably variable speed which motor comprises a main stator (21) and a main rotor (23), an auxiliary stator (17) and an auxiliary rotor (27) electrically and mechanically coupled to the main rotor (23), a main inverter (35) for supplying the main stator (21) and an auxiliary inverter (37) for supplying the auxiliary stator (17) and a controller (40) for the inverters; characterised by the control of the inverters by the controller (40) to cause the auxiliary rotor (27) to deliver reactive power to the main rotor (23), and by operation of the main inverter (35) to operate by line commutation.

9. A method as claimed in Claim 8 in which the speed of the system is controlled by simultaneously varying the frequency of operation of the main inverter (35), the frequency of operation of the auxiliary inverter (37) and the voltage level of the auxiliary inverter (37).

10. A method as claimed in Claim 8 or Claim 9 including the step of start-up operation in which the main inverter (35) is arranged to short the main stator (21) until the main rotor (21) has reached a speed greater than a prescribed percentage of its maximum speed.

**Claims for Contracting States: CH, DE, FR, GB, IT, LI**

1. A variable speed dynamoelectric induction motor drive system comprising a main stator (21) and a main rotor (23), an auxiliary stator (17) and an auxiliary rotor (27) electrically and mechanically coupled to the main rotor (23), a main inverter (35) connected to the main stator (21) for supply of electric current at a constant voltage thereto, an auxiliary inverter (37) connected to the auxiliary stator for supplying electric current at a variable voltage thereto, and a controller (40) for the inverters; the controller (40) being arranged to control the speed of the motor drive system by simultaneously varying the frequency of operation of the main inverter (35), the frequency of operation of the auxiliary inverter (37), and the voltage level of the auxiliary inverter (37) while maintaining the voltage level of the main inverter (35) at a constant level, whereby reactive power is supplied to the auxiliary rotor, for enabling the main inverter to operate as a line-commutated inverter.

2. A drive system as claimed in Claim 1, including supply means for the main inverter (35) including an AC voltage source (45) and a diode rectifier (43) for producing a substantially constant DC voltage from the AC voltage source.

3. A motor drive system as claimed in Claim 1 or Claim 2 in which the main and auxiliary rotors are squirrel-cage rotors with the rotor bars concatenated at their adjoining ends.

4. A motor drive system as claimed in any of the preceding Claims in which the auxiliary inverter (37) is a forced commutated inverter.

5. A motor drive system as claimed in any of the preceding claims including switch means (47) for disabling the supply to the main inverter (35) during start-up of the system.

6. A motor drive system as claimed in any of the preceding Claims in which the main and the auxiliary machines have their rotors (23, 27) mounted on a common shaft (29), the stators (21, 25) being in a common housing (19).

7. A variable speed dynamoelectric motor drive system as claimed in any of the preceding claims, and including a plurality of machines each comprising a main stator, a main rotor, an auxiliary stator, an auxiliary rotor, an auxiliary inverter, and a speed controlling means; all the main stators (53a, b...) being connected to be supplied from a common main inverter (61) supplying electric current at a constant voltage level.

8. A method of driving an induction motor at a controllably variable speed which motor comprises a main stator (21) and a main rotor (23), an auxiliary stator (17) and an auxiliary rotor (27) electrically and mechanically coupled to the main rotor (23), a main inverter (35) for supplying the main stator (21) and an auxiliary inverter (37) for supplying the auxiliary stator (17);

the main inverter supplying current to the main stator (21) at a constant voltage level, and the speed of the system being controlled by simultaneously varying the frequency of operation of the main inverter (35), the frequency of operation of the auxiliary inverter (37), and the voltage level of the auxiliary inverter (37), with reactive power being supplied from the auxiliary rotor to the main rotor whereby the main inverter operates as a line-commutated inverter.

9. A method as claimed in Claim 8 including the step of start-up operation in which the main inverter (35) is arranged to short the main stator (21) until the main rotor (21) has reached a speed greater than a prescribed percentage of its maximum speed.

**Patentansprüche fur die Ventragsstaaten: NL, SE**

1. Antriebssystem mit dynamoelektrischen Induktionsmotor mit veränderbarer Geschwindigkeit, mit einer Hauptstator (21) und einem Hauptrotor (23), einem Hilfsstator (17) und einem Hilfsrotor (27), der elektrisch und mechanisch mit dem Hauptrotor (23) gekoppelt ist, einem Hauptinverter (35), der mit dem Hauptstator (21) zur Einspeisung elektrischen Stromes verbunden ist, einem Hilfsinverter (37), der an den Hilfsstator angeschlossen ist und diesen mit elektrischem Strom speist, und einer Steuervorrichtung (40) für die Inverter, dadurch gekennzeichnet, daß die Steuervorrichtung (40) so ausgelegt ist, daß sie die Inverter in der Weise steuert, daß der Hilfsrotor (27) reaktive Energie in den Hauptrotor (23) liefert, damit eine Linienkommutierung des Hauptinverters (35) erzielt wird.

2. Motorantriebssystem nach Anspruch 1, dadurch gekennzeichnet, daß die Steuervorrichtung (40) so ausgelegt ist, daß sie die Drehzahl des Motorantriebssystems in der Weise steuert, daß gleichzeitig die Betriebsfrequenz des Hauptinverters (35), die Betriebsfrequenz des Hilfsinverters (37) und der Spannungspegel des Hilfsinverters (37) verändert wird, während der Spannungspegel des Hauptinverters (35) auf einem konstanten Wert gehalten wird.

3. Motorantriebssystem nach Anspruch 1 oder 2, dadurch gekennzeichnet, daß die Haupt- und Hilfsrotoren Käfigläuferrotoren sind, deren Rotorstäbe an ihren aneinander anschließenden Enden hinterneinander geschaltet sind.

4. Motorantriebssystem nach einem der vorausgehenden Ansprüche, bei dem der Hilfsinverter (37) ein Inverter mit erzwungener Kommutierung ist.

5. Motorantriebssystem nach einem der vorausgehenden Ansprüche, mit einer Schaltvorrichtung (47) zum Unwirksammachen der Einspeisung in den Hauptinverter (35) während der Anlaufphase des Systems.

6. Motorantriebssystem nach einem der vorausgehenden Ansprüche, bei dem die Rotoren (23, 27) der Haupt- und Hilfsmaschinen auf einem gemeinsamen Welle (29) befestigt sind und bei der die Statoren (21, 25) in einem gemeinsamen Gehäuse (19) untergebracht sind.

7. Antriebssystem mit dynamoelektrischem Motor mit veränderbarer Geschwindigkeit, nach einem der vorausgehenden Ansprüche, mit mehreren Maschinen, deren jede einen Hauptstator, einen Hauptrotor, einen Hilfsstator, einen Hilfsrotor, einen Hilfsinverter und eine Drehzahlsteuervorrichtung aufweist, wobei alle Hauptstatoren (53a, b, ...) so geschaltet sind, daß sie aus einem gemeinsamen Hauptinverter (61) gespeist werden, der elektrischen Strom bei einem konstanten Spannungswert einspeist.

8. Verfahren zum Antreiben eines Induktionsmotors mit einer steuerbar veränderlichen Drehzahl, wobei der Motor einen Hauptstator (21) und einen Hauptrotor (23), einen Hilfsstator (17) und einen Hilfsrotor (27), der elektrisch mit dem Hauptrotor (23) gekoppelt ist, einen Hauptinverter (35) zur Speisung des Hauptstators (21) und einen Hilfsinverter (37) zur Speisung des Hilfsstators (17) aufweist, und einer Steuervorrichtung (40) für die Inverter, dadurch gekennzeichnet, daß die Steuerung der Inverter durch die Steuervorrichtung (40) bewirkt, daß der Hilfsrotor (27) reaktive Energie an den Hauptrotor (23) abgibt, und daß der Hauptinverter (35) so betrieben wird, daß er mit Linienkommutierung arbeitet.

9. Verfahren nach Anspruch 8, bei dem die Drehzahl der Anordnung dadurch gesteuert wird, daß gleichzeitig die Betriebsfrequenz des Hauptinverters (35), die Betriebsfrequenz des Hilfsinverters (37) und der Spannungspegels des Hilfsinverters (37) verändert werden.

10. Verfahren nach Anspruch 8 oder 9, mit einem Anlaufvorgang, bei dem der Hauptinverter (35) den Hauptstator (21) kurzschließt, bis der Hauptrotor (23) eine Drehzahl erreicht hat, die höher ist als ein vorbeschriebener Prozentsatz seiner maximalen Drehzahl.

**Patentansprüche für die Vertragsstaaten: CH, DE, FR, GB, IT, LI**

1. Antriebssystem mit dynamoelektrischem Induktionsmotor mit veränderbarer Geschwindigkeit, mit einem Hauptstator (21) und einem Hauptrotor (23), einem Hilfsstator (17) und einem Hilfsrotor (27), der elektrisch und mechanisch mit dem Hauptrotor (23) gekoppelt ist, einem Hauptinverter (35), der mit dem Hauptstator (21) zur Einspeisung elektrischen Stromes bei einer konstanten Spannung verbunden ist, einem Hilfsinverter (37), der an den Hilfsstator angeschlossen ist und diesen mit elektrischem Strom veränderlicher Spannung speist, und einer Steuervorrichtung (40) für die Inverter, die so ausgelegt ist, daß sie die Drehzahl des Motorantriebssystems in der Weise steuert, daß gleichzeitig die Betriebsfrequenz des Hauptinverters (35), die Betriebsfrequenz des Hilfsinverters (37) und der Spannungspegel des Hilfsinverters (27) verändert wird, während der Spannungspegel des Hauptinverters (35) auf einem konstanten Wert gehalten wird, wodurch reaktive Energie in den Hilfsrotor eingespeist wird, damit der Hauptinverter als ein linienkommutierter Inverter arbeiten kann.

2. Motorantriebssystem nach Anspruch 1, gekennzeichnet durch eine Speisevorrichtung für den Hauptinverter (35) mit einer Wechselspannungsquelle (45) und einem Diodengleichrichter (43) zur Erzeugung einer im wesentlichen konstanten Gleichspannung aus der Wechselspannungsquelle.

3. Motorantriebssystem nach Anspruch 1 oder 2, dadurch gekennzeichnet, daß die Haupt- und Hilfsrotoren Käfigläuferrotoren sind, deren Rotorstäbe an ihren aneinander anschließenden Enden hintereinander geschaltet sind.

4. Motorantriebssystem nach einem der vorausgehenden Ansprüche, bei dem der Hilfsinverter (37) ein Inverter mit erzwungener Kommutierung ist.

5. Motorantriebssystem nach einem der vorausgehenden Ansprüche, mit einer Schaltvorrichtung (47) zum Umwirksammachen der Einspeisung in den Hauptinverter (35) während der Anlaufphase des Systems.

6. Motorantriebssystem nach einem der vorausgehenden Ansprüche, bei dem die Rotoren (23, 27) der Haupt- und Hilfsmaschinen auf einer gemeinsamen Welle (29) befestigt sind und bei der die Statoren (21, 25) in einem gemainsamen Gehäuse (19) untergebracht sind.

7. Antriebssystem mit dynamoelektrischem Motor mit veränderbarer Geschwindigkiet, nach einem der vorausgehenden Ansprüche, mit mehreren Maschinen, deren jede einen Hauptstator, einen Hauptrotor, einen Hilfsstator, einen Hilfsrotor, einen Hilfsinverter und eine Drehzahlsteuervorrichtung aufweist, wobei alle Hauptstatoren (53a, b, ...) so geschaltet sind, daß sie aus einem gemeinsamen Hauptinverter (61) gespeist werden, der elektrischen Strom bei einem konstanten Spannungswert einspeist.

8. Verfahren zum Antreiben eines Induktionsmotors mit einer steuerbar veränderlichen Drehzahl, wobei der Motor einen Hauptstator (21) und einen Hauptrotor (23), einen Hilfsstator (17) und einen Hilfsrotor (27), der elektrisch mit dem Hauptrotor (23) gekoppelt ist, einen Hauptinverter (35) zur Speisung des Hauptstators (21) und einen Hilfsinverter (37) zur Speisung des Hilfsstators (17) aufweist, bei dem der Hauptinverter Strom in den Hauptstator (21) bei einem konstanten Spannungwert einspeist und die Drehzahl des Systems dadurch gesteuert wird, daß gleichzeitig die Betriebsfrequenz des Hauptinverters (35), die Betriebsfrequenz des Hilfsinverters (37), und der Spannungewert des Hilfsinverters (37) verändert wird, und bei dem reaktive Energie aus dem Hilfsrotor in den Hauptrotor eingespeist wird, wodurch der Hauptinverter als linienkommutierter Inverter arbeitet.

9. Verfahren nach Anspruch 8, mit einem Anlaufvorgang, bei dem der Hauptinverter (35) den Hauptstator (21) kurzschließt, bis der Hauptrotor (23) eine Drehzahl erreicht hat, die höher ist als ein vorbeschriebener Prozentsatz seiner maximalen Drehzahl.

**Revendications pour les Etats Contractants: NL, SE**

1. Système d'entraînement à moteur à induction electrodynamique à vitesse variable comprenant un stator principal (21) et un rotor principal (23), un stator auxiliaire (17) et un rotor auxiliaire (27) électriquement et mécaniquement relié au rotor principal (23), un convertisseur principal (35) relié au stator principal (21) pour lui fournir un courant électrique, un convertisseur auxiliaire (37) relié au stator auxiliaire pour lui fournir un courant électrique et un dispositif de commande (40) pour les convertisseurs; caractérisé en ce que le dispositif de commande (40) est agencé pour contrôler les convertisseurs de façon que le rotor auxiliaire (27) délivre une puissance réactive au rotor principal (23) afin de permettre la commutation de ligne du convertisseur principal (35).

2. Système d'entraînement suivant la revendication 1 dans lequel le dispositif de commande (40) est agencé pour régler la vitesse du système d'entraînement à moteur par modification simultanée de la fréquence de fonctionnement du convertisseur principal (35), de la fréquence de fonctionnement du convertisseur auxiliaire (37) et du niveau de tension du convertisseur auxiliaire (37) tout en maintenant le niveau de tension du convertisseur principal (35) à un niveau constant.

3. Système d'entraînement à moteur suivant la revendication 1 ou la revendication 2, dans lequelle rotor principal et le rotor auxiliaire sont des rotors à cage d'écureuil dont les barreaux de rotor sont reliés en chaîne à leurs extrémités adjacentes.

4. Système d'entraînement à moteur suivant l'une quelconque des revendications précédentes, dans lequel le convertisseur auxiliaire (37) est un convertisseur à commutation forcée.

5. Système d'entraînement à moteur suivant l'une quelconque des revendications précédentes, comprenant des moyens d'interruption (47) pour couper l'alimentation du convertisseur principal (35) pendant le démarrage du système.

6. Système d'entraînement de moteur suivant l'une quelconque des revendications précédentes, dans lequel les machines principale et auxiliaire ont leurs rotors (23, 27) montés sur un arbre commun (29), les stators (21, 25) étant dans un carter commun (19).

7. Système d'entraînement à moteur éeltro-dynamique à vitesse variable suivant l'une quelconque des revendications précédentes, et comprenant une pluralité de machines comportant chacune un stator principal, un rotor principal, un stator auxiliaire, un rotor auxiliaire, un convertisseur auxiliaire et un dispositif de réglage de vitesse, tous les stators principaux (53a, b...) étant connectés de manière à être alimentés par un convertisseur principal commun (61) fournissant un courant électrique de tension constante.

8. Procédé d'entraînement d'un moteur à induction à une vitesse variable de façon commandée, dont le moteur comprend un stator principal (21) et un rotor principal (23), un stator auxiliaire (17) et un rotor auxiliaire (27) électriquement et mécaniquement relié au rotor principal (23), un convertisseur principal (35) pour alimenter le stator principal (21) et un convertisseur auxiliaire (37) pour alimenter le stator auxiliaire (17) et un dispositif de commande (40) pour les convertisseurs; caractérisé en ce que le contrôle des convertisseurs par le dispositif de commande (40) fait que le rotor auxiliaire (27) délivre une puissance réactive au rotor principal (23) et en ce que le fonctionnement du convertisseur principal (35) est un fonctionnement à commutation de ligne.

9. Procédé suivant la revendication 8 dans lequel la vitesse du système est contrôlée par variation simultanée de la fréquence de fonctionnement du convertisseur principal (35), de la fréquence de fonctionnement du convertisseur auxiliaire (37) et du niveau de tension du convertisseur auxiliaire (37).

10. Procédé suivant l'une des revendications 8 ou 9 comprenant une opération de démarrage dans laquelle le convertisseur principal (35) est prévu pour court-circuiter le stator principal (21) jusqu'à ce que le rotor principal (23) ait atteint une vitesse supérieure à un pourcentage prescrit de sa vitesse maximale.

**Revendications pour les Etats Contractants: CH, DE, FR, GB, IT, LI**

1. Système d'entraînement à moteur à induction électrodynamique à vitesse variable comprenant un stator principal (21) et un rotor principal (23), un stator auxiliaire (17) et un rotor auxiliaire (27) électriquement et mécaniquement relié au rotor principal (23), un convertisseur principal (35) relié au stator principal (21) pour lui fournir un courant électrique à une tension constante, un convertisseur auxiliaire (37) relié au stator auxiliaire pour lui fournir un courant électrique à une tension variable, et un dispositif de commande (40) pour les convertisseurs, le dispositif de commande (40) étant agencé pour régler la vitesse du système d'entraînement à moteur par modification simultanée de la fréquence de fonctionnement du convertisseur principal (35), de la fréquence de fonctionnement du convertisseur auxiliaire (37) et du niveau de tension du convertisseur auxiliaire (37) tout en maintenant la tension du convertisseur principal (35) à une valeur constante de sorte qu'une puissance réactive est fournie au rotor auxiliaire, pour permettre au convertisseur principal de fonctionner en convertisseur à commutation de ligne.

2. Système d'entraînement suivant la revendication 1, qui comprend des moyens d'alimentation pour le convertisseur principal (35) comportant une source de tension alternative (45) et un redresseur à diodes (43) pour produire une tension continue sensiblement constante à partir de la source de tension alternative.

3. Système d'entraînement à moteur suivant la revendication 1 ou la revendication 2, dans lequel le rotor principal et le rotor auxiliaire sont des rotors à cage d'écureuil dont les barreaux de rotor sont reliés en chaîne à leurs extrémités adjacentes.

4. Système d'entraînement à moteur suivant l'une quelconque des revendications précédentes, dans lequel le convertisseur auxiliaire (37) est un convertisseur à commutation forcée.

5. Système d'entraînement à moteur suivant l'une quelconque des revendications précédentes, comprenant des moyens d'interruption (47) pour couper l'alimentation du convertisseur principal (35) pendant le démarrage du système.

6. Système d'entraînement de moteur suivant l'une quelconque des revendications précédentes, dans lequel les machines principale et auxiliaire ont leurs rotors (23, 27) montés sur un arbre commun (29), les stators (21, 25) étant dans un carter commun (19).

7. Système d'entraînement à moteur électrodynamique à vitesse variable suivant l'une quelconque des revendications précédentes, et comprenant une pluralité de machines comportant chacune un stator principal, un rotor principal, un stator auxiliaire, un rotor auxiliare, un convertisseur auxiliaire et un dispositif de réglage de vitesse, tous les stators principaux (53a, b...) étant connectés de manière à être alimentés par un convertisseur principal commun (61) fournissant un courant électrique de tension constante.

8. Procédé d'entraînement d'un moteur à induction à une vitesse variable de façon commandée, dont le moteur comprend un stator principal (21) et un rotor principal (23), un stator auxiliaire (17) et un rotor auxiliaire (27) électriquement et mécaniquement relié au rotor principal (23), un convertisseur principal (35) pour alimenter le stator principal (21) et un convertisseur auxiliaire (37) pour alimenter le stator auxiliaire (17), le convertisseur principal fournissant le courant au stator principal (21) à une tension constante, et la vitesse du système étant réglée par modification simultanée de la fréquence de fonctionnement du convertisseur principal (35), de la fréquence de fonctionnement du convertisseur auxiliaire (37) et de la tension du convertisseur auxiliaire (37), une puissance réactive étant fournie par le rotor auxiliaire au rotor principal de sorte que le convertisseur principal fonctionne en convertisseur à commutation de ligne.

9. Procédé suivant la revendication 8, comprenant une opération de démarrage dans laquelle le convertisseur principal (35) est prévu pour court-circuiter le stator principal (21) jusqu'à ce que le rotor principal (23) ait atteint une vitesse supérieure à une pourcentage prescrit de sa vitesse maximale.

FIG. 1.

45 — 3∅

47 — SWITCHES

43 — DIODE RECTIFIER

DC LINK

35 — MAIN INVERTER

11 — INDUCTION MOTOR

13 — FAN

51 — TACHOMETER

37 — AUXILIARY INVERTER

VARIABLE DC LINK

40 — CONTROLLER

41

42

53

FIG. 2.

45 — 3∅

47

43

49

35

GATE SIGNALS (LINES 41)

TO INDUCTION MOTOR

0 093 615

AUX. INVERTER VOLTAGE
(% OF MAIN INVERTER
VOLTAGE)

Fig. 3

20

BOUNDARY LINE

10

50

0

20    40    60    80    100    120    MAIN INVERTER
                                       FREQUENCY (Hz)

10

BOUNDARY LINE

20

50%   62.5%   75%   87.5%   100%    MOTOR SPEED

AUX INVERTER
VOLTAGE (% OF
MAIN INVERTER
VOLTAGE)

Fig. 4

FREQUENCY (Hz)

20%   100Hz

MAIN INVERTER
FREQUENCY

AUX INVERTER
VOLTAGE

10%   50Hz

AUX INVERTER
FREQUENCY

0    10   20   30   40   50   60   70   80   90   100   MOTOR SPEED (%)

2:1 SPEED
RANGE

2

FIG. 5

Fig. 6